# EUROPEAN PATENT APPLICATION

(11) **EP 4 745 270 A2**
(43) Date of publication of application: **20.05.2026**
(21) Application number: 25214358.1
(22) Date of filing: 07.11.2025
(51) Int. Cl.: C25B 1/042, C25B 15/021, C25B 15/08, C01B 3/0005, H01M 8/18, H01M 8/04007, H01M 8/04082

(54) **SOEC ELECTROLYSIS SYSTEM HAVING HYDROGEN ABSORPTION AND RELEASE UNIT**

(30) Priority: 15.11.2024 JP 2024200112; 15.01.2025 JP 2025005226
(71) Applicant: AISIN CORPORATION, Aichi 448-8650 (JP)
(72) Inventor: OGURI, Nobuaki, Kariya, Aichi, 448-8650 (JP); UMEO, Kiyoshiro, Kariya, Aichi, 448-8650 (JP)
(74) Representative: Cabinet Beau de Loménie

(57) **Abstract**

An electrolysis system (10) includes: a solid oxide electrolysis cell (21) configured to electrolyze steam supplied to a hydrogen electrode to generate hydrogen; a hydrogen absorption and release unit (70) configured to cool a hydrogen carrier (71) to absorb hydrogen and heat the hydrogen carrier to release hydrogen; a steam supply line (35) configured to supply steam to the hydrogen electrode; a recovery line (61) configured to recover hydrogen contained in an exhaust gas exhausted from the hydrogen electrode to the hydrogen absorption and release unit; a gas-liquid separation unit (62) provided in the recovery line and configured to cool the exhaust gas by heat exchange with a coolant to perform gas-liquid separation; a coolant supply line (63) configured to supply the coolant to the gas-liquid separation unit and then supply the coolant to the hydrogen absorption and release unit; and a first cooling heat exchange unit (72) provided in the hydrogen absorption and release unit and configured to cool the hydrogen carrier by heat exchange with the coolant supplied from the coolant supply line.

## Description

### TECHNICAL FIELD

This disclosure relates to an electrolysis system.

### BACKGROUND DISCUSSION

In the related art, an electrochemical device including a solid oxide electrolysis cell that electrolyzes H₂O to generate H₂, a hydrogen occlusion material that occludes H₂ generated by the solid oxide electrolysis cell, and a heat transport unit that transports heat from the hydrogen occlusion material to the solid oxide electrolysis cell has been proposed (for example, see JP 2013-199675A (Reference 1)). This device includes, as the heat transport unit, a heat exchanger that exchanges heat between a pipe for supplying H₂O to the solid oxide electrolysis cell and the hydrogen occlusion material. This heat exchanger transfers heat from the hydrogen occlusion material to H₂O to vaporize H₂O to be supplied to the solid oxide electrolysis cell. Accordingly, heat absorption of the solid oxide electrolysis cell and heat generation of the hydrogen occlusion material can be canceled out, and energy efficiency can be improved. A pipe for transporting only H₂ from a gas containing H₂ and H₂O exhausted from the solid oxide electrolysis cell to the hydrogen occlusion material is provided with a heat exchanger for cooling the gas by heat exchange with cooling water and a pipe for removing drain water after cooling the gas.

In addition, a method for storing and transporting hydrogen based on a bicarbonate-formic acid cycle has also been proposed (for example, see JP 2017-500272A (Reference 2)).

In the electrochemical device described above, cold heat of H₂O to be supplied to the solid oxide electrolysis cell is used to occlude hydrogen in the hydrogen occlusion material. However, since a supply amount of H₂O to the solid oxide electrolysis cell is restricted according to a target generation amount of hydrogen, there is a case where sufficient cold heat required for occlusion of hydrogen cannot be secured. Such a problem may similarly occur when a liquid organic hydrogen carrier (LOHC) such as bicarbonate/formic acid is used as a hydrogen carrier instead of the hydrogen occlusion material.

A need thus exists for an electrolysis system capable of securing cold heat required for absorption of hydrogen into a hydrogen carrier and reducing an energy loss related to the absorption of hydrogen.

### SUMMARY

According to an aspect of this disclosure, an electrolysis system includes: a solid oxide electrolysis cell configured to electrolyze steam supplied to a hydrogen electrode to generate hydrogen; a hydrogen absorption and release unit configured to cool a hydrogen carrier to absorb hydrogen and heat the hydrogen carrier to release hydrogen; a steam supply line configured to supply steam to the hydrogen electrode; a recovery line configured to recover hydrogen contained in an exhaust gas exhausted from the hydrogen electrode to the hydrogen absorption and release unit; a gas-liquid separation unit provided in the recovery line and configured to cool the exhaust gas by heat exchange with a coolant to perform gas-liquid separation; a coolant supply line configured to supply the coolant to the gas-liquid separation unit and then supply the coolant to the hydrogen absorption and release unit; and a first cooling heat exchange unit provided in the hydrogen absorption and release unit and configured to cool the hydrogen carrier by heat exchange with the coolant supplied from the coolant supply line.

The electrolysis system of the present disclosure includes the gas-liquid separation unit that performs gas-liquid separation of the exhaust gas from the hydrogen electrode of the solid oxide electrolysis cell, and the coolant supply line that sequentially supplies the coolant to the hydrogen carrier. By using the coolant used in the gas-liquid separation unit also for cooling the hydrogen carrier, it is possible to secure cold heat required for absorption of hydrogen into the hydrogen carrier and to reduce an energy loss caused by absorption of hydrogen. As a result, energy efficiency of the entire system can be further improved. Here, examples of the hydrogen carrier include a hydrogen occlusion material and a liquid organic hydrogen carrier.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic diagram showing an electrolysis system according to a first embodiment;
Fig. 2 is a diagram showing flows of raw material water, cooling water, and unused exhaust heat during hydrogen generation;
Fig. 3 is a diagram showing a flow of the unused exhaust heat during hydrogen release;
Fig. 4 is a schematic diagram showing an electrolysis system according to a second embodiment;
Fig. 5 is a diagram showing flows of raw material water, cooling water, and unused exhaust heat during the hydrogen generation; and
Fig. 6 is a diagram showing a flow of the unused exhaust heat during the hydrogen release.

### DETAILED DESCRIPTION

Next, embodiments of this disclosure will be described with reference to the drawings.

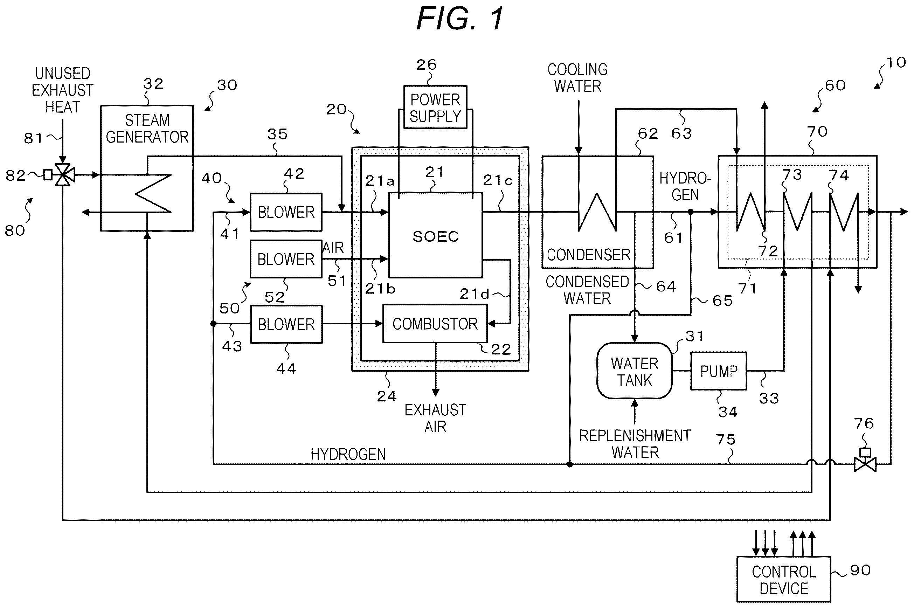

Fig. 1 is a schematic diagram showing an electrolysis system 10 according to a first embodiment. As shown in Fig. 1, the electrolysis system 10 according to the first embodiment includes an electrolysis module 20 including an electrolysis cell stack 21 that generates hydrogen by steam electrolysis, a steam supply system 30 that supplies steam to the electrolysis module 20, a hydrogen supply system 40 that supplies hydrogen to the electrolysis module 20, an air supply system 50 that supplies air as a sweep gas to the electrolysis module 20, and a hydrogen recovery system 60 that causes a hydrogen occlusion ally 71 to occlude the generated hydrogen generated by the electrolysis module 20 and recovers the generated hydrogen.

The electrolysis module 20 includes, in addition to the electrolysis cell stack 21, a combustor 22 and a heat exchange unit (not shown), which are accommodated in a module case 24 having a heat insulating property.

The electrolysis cell stack 21 includes a plurality of solid oxide electrolysis cells (SOECs) each including a solid electrolyte, a hydrogen electrode disposed on one surface side of the solid electrolyte, and an oxygen electrode disposed on the other surface side of the solid electrolyte. An electrolysis operation of the electrolysis cell stack 21 is performed by supplying steam to the hydrogen electrode and supplying electric power from a power supply device 26. At the hydrogen electrode, steam is decomposed into oxygen ions and hydrogen to generate hydrogen. In addition, at the oxygen electrode, the decomposed oxygen ions pass through the solid electrolyte and combine with electrons to generate oxygen. As the power supply device 26, a system power supply, a renewable energy device (for example, a solar photovoltaic device), a storage battery, and the like can be used.

Since the electrolysis cell stack 21 operates in a high-temperature environment of, for example, 650°C to 800°C, the solid electrolyte, the hydrogen electrode, and the oxygen electrode are produced using a ceramic material. In addition, in order to decompose the steam into oxygen ions and hydrogen by a catalyst, a cermet of a metal such as nickel having a catalytic action and ceramics is used for the hydrogen electrode. In order to maintain good catalytic activity of the hydrogen electrode, it is required to keep the hydrogen electrode in a reducing atmosphere and prevent oxidation of the metal. Therefore, in the present embodiment, the steam supplied to the hydrogen electrode is mixed with antioxidant hydrogen.

One end of a hydrogen electrode inlet pipe 21a is connected to a hydrogen electrode inlet of the electrolysis cell stack 21, and the steam supply system 30 and the hydrogen supply system 40 are connected to the other end of the hydrogen electrode inlet pipe 21a. In addition, one end of an oxygen electrode inlet pipe 21b is connected to an oxygen electrode inlet of the electrolysis cell stack 21, and the air supply system 50 is connected to the other end of the oxygen electrode inlet pipe 21b. One end of a hydrogen electrode outlet pipe 21c is connected to a hydrogen electrode outlet of the electrolysis cell stack 21, and the hydrogen recovery system 60 is connected to the other end of the hydrogen electrode outlet pipe 21c. In addition, one end of an oxygen electrode outlet pipe 21d is connected to an oxygen electrode outlet of the electrolysis cell stack 21, and the combustor 22 is connected to the other end of the oxygen electrode outlet pipe 21d. A combustion hydrogen supply pipe 43 is connected to the combustor 22.

The steam supply system 30 includes a water tank 31 that stores raw material water (pure water) replenished via a pure water device (not shown), a steam generator 32 that heats the raw material water to generate steam, a water supply pipe 33 connected to the water tank 31 and the steam generator 32, a water pump 34 that is provided in the water supply pipe 33 and pressure-feeds the raw material water in the water tank 31 to the steam generator 32, and a steam supply pipe 35 that supplies the steam generated by the steam generator 32 to the hydrogen electrode inlet pipe 21a of the electrolysis module 20. The steam generator 32 is connected to an exhaust heat supply pipe 81, and generates steam using unused exhaust heat (for example, 50°C to 60°C) exhausted from a factory or the like and supplied via the exhaust heat supply pipe 81 as a heat source. Examples of the steam generator 32 include a steam heat pump that includes a heat recovery heat exchanger (evaporator), a compressor, a steam generation heat exchanger (condenser), an expansion valve, and a circulation pipe that connects these components such that a refrigerant circulates, and that generates steam (saturated steam) by exchanging heat between unused exhaust heat and the refrigerant by the heat recovery heat exchanger and then exchanging heat between the compressed and heated refrigerant and raw material water by the steam generation heat exchanger. The steam generator 32 may be any steam generator as long as it generates steam by heating the raw material water using unused exhaust heat as at least one heat source. The steam introduced from the steam supply system 30 into the hydrogen electrode inlet pipe 21a is heated by heat exchange with a combustion exhaust gas or the like by a heat exchange unit (not shown) provided in the hydrogen electrode inlet pipe 21a, and then supplied to the hydrogen electrode of the electrolysis cell stack 21.

The hydrogen supply system 40 includes an antioxidant hydrogen supply pipe 41 having one end connected to the hydrogen electrode inlet pipe 21a, a hydrogen blower 42 provided in the antioxidant hydrogen supply pipe 41, the combustion hydrogen supply pipe 43 having one end connected to the combustor 22, and a hydrogen blower 44 provided in the combustion hydrogen supply pipe 43. By driving the hydrogen blower 42, hydrogen is introduced into the antioxidant hydrogen supply pipe 41, and the introduced hydrogen is supplied to the hydrogen electrode of the electrolysis cell stack 21 as antioxidant hydrogen. By driving the hydrogen blower 44, hydrogen is introduced into the combustion hydrogen supply pipe 43, and the introduced hydrogen is supplied to the combustor 22 as combustion hydrogen. A flowmeter (not shown) is provided in each of the antioxidant hydrogen supply pipe 41 and the combustion hydrogen supply pipe 43.

The air supply system 50 includes an air supply pipe 51 connected to the oxygen electrode inlet pipe 21b, and an air blower 52 provided in the air supply pipe 51. By driving the air blower 52, the air aspirated into the air supply pipe 51 is introduced into the oxygen electrode inlet pipe 21b, heated by heat exchange with the combustion exhaust gas, a hydrogen electrode off-gas, or the like by a heat exchange unit (not shown) provided in the oxygen electrode inlet pipe 21b, and then supplied to the oxygen electrode of the electrolysis cell stack 21.

The hydrogen recovery system 60 recovers the generated hydrogen from the hydrogen electrode off-gas containing the generated hydrogen exhausted from the hydrogen electrode outlet and unreacted steam. The hydrogen recovery system 60 includes a hydrogen occlusion device 70, a hydrogen recovery pipe 61 that connects the hydrogen electrode outlet pipe 21c and an inlet of the hydrogen occlusion device 70, a condenser 62 provided in the hydrogen recovery pipe 61, and a cooling water supply pipe 63 that supplies cooling water to the condenser 62 and the hydrogen occlusion device 70 in this order. The condenser 62 condenses steam contained in the hydrogen electrode off-gas flowing through the hydrogen recovery pipe 61 by heat exchange with the cooling water flowing through the cooling water supply pipe 63, and performs gas-liquid separation on the hydrogen electrode off-gas into generated hydrogen and condensed water. The condensed water separated by the condenser 62 is stored in the water tank 31 through a condensed water pipe 64. The condensed water stored in the water tank 31 is used as the raw material water for generating steam for electrolysis.

The hydrogen occlusion device 70 includes the hydrogen occlusion alloy 71 that occludes hydrogen by cold heat and releases hydrogen by heating, a first cooling heat exchange unit 72 and a second cooling heat exchange unit 73 for cooling the hydrogen occlusion alloy 71, and a heating heat exchange unit 74 for heating the hydrogen occlusion alloy 71.

The hydrogen occlusion alloy 71 is a powdery or granular member that is an alloy of two or more metals including magnesium, titanium, vanadium, lanthanum, and the like, and has a characteristic of, for example, occluding hydrogen at about 30°C to 40°C and releasing the occluded hydrogen at about 50°C to 60°C.

The first cooling heat exchange unit 72 is connected to the cooling water supply pipe 63 downstream of the condenser 62, and cools the hydrogen occlusion alloy 71 by heat exchange with the cooling water (for example, 35°C to 40°C) passing through the condenser 62. The second cooling heat exchange unit 73 is connected to the water supply pipe 33 downstream of the water tank 31 and upstream of the steam generator 32, and cools the hydrogen occlusion alloy 71 by heat exchange with the raw material water (for example, 20°C to 30°C) from the water tank 31. The raw material water heated by heat exchange with the hydrogen occlusion alloy 71 is supplied to the steam generator 32. In the present embodiment, for the first cooling heat exchange unit 72 and the second cooling heat exchange unit 73, the first cooling heat exchange unit 72 is disposed upstream of the second cooling heat exchange unit 73 with respect to the flow of the generated hydrogen, such that the heat exchange with the generated hydrogen introduced into the hydrogen occlusion device 70 is performed in an order of the cooling water and the raw material water (in an order from the highest water temperature). The condenser 62 is supplied with a large amount of cooling water for heat exchange with the hydrogen electrode off-gas, and has a large heat capacity, and thus the cooling water passed through the condenser 62 can secure the cold heat required for the hydrogen occlusion alloy 71 to occlude hydrogen. On the other hand, although a temperature of the raw material water is lower than a temperature of the cooling water passed through the condenser 62, sufficient cold heat cannot be secured by simply supplying the raw material water since a supply amount of the raw material water is restricted according to a target generation amount of hydrogen. In the present embodiment, since the supply of the raw material water is used in combination with the supply of the cooling water, it is possible to promote the cooling of the hydrogen occlusion alloy 71, to exhibit performance of the hydrogen occlusion alloy 71, and to occlude a sufficient amount of hydrogen.

The heating heat exchange unit 74 is connected to the exhaust heat supply pipe 81 and heats the hydrogen occlusion alloy 71 by heat exchange with unused exhaust heat (for example, 50°C to 60°C) supplied via the exhaust heat supply pipe 81.

One end of a hydrogen supply pipe 75 is connected to an outlet of the hydrogen occlusion device 70, and the other end of the hydrogen supply pipe 75 is connected to the other end of the antioxidant hydrogen supply pipe 41 and the other end of the combustion hydrogen supply pipe 43. The hydrogen supply pipe 75 is provided with an on-off valve 76. The hydrogen occluded in the hydrogen occlusion alloy 71 of the hydrogen occlusion device 70 is released by the heating heat exchange unit 74 heating the hydrogen occlusion alloy 71. The released hydrogen is drawn into the antioxidant hydrogen supply pipe 41 by driving the hydrogen blower 42 in a state where the on-off valve 76 is opened, and is supplied from the antioxidant hydrogen supply pipe 41 to the hydrogen electrode of the electrolysis cell stack 21. The released hydrogen is drawn into the combustion hydrogen supply pipe 43 by driving the hydrogen blower 44 in the state where the on-off valve 76 is opened, and is supplied from the combustion hydrogen supply pipe 43 to the combustor 22.

A reflux pipe 65 branches from downstream of the condenser 62 in the hydrogen recovery pipe 61 and upstream of the hydrogen occlusion device 70 and is connected to the other end of the antioxidant hydrogen supply pipe 41 and the other end of the combustion hydrogen supply pipe 43. The generated hydrogen flowing through the hydrogen recovery pipe 61 is drawn into the antioxidant hydrogen supply pipe 41 from the reflux pipe 65 by driving the hydrogen blower 42 in a state where the on-off valve 76 is closed, and is supplied to the hydrogen electrode of the electrolysis cell stack 21 from the antioxidant hydrogen supply pipe 41. The generated hydrogen flowing through the hydrogen recovery pipe 61 is drawn into the combustion hydrogen supply pipe 43 from the reflux pipe 65 by driving the hydrogen blower 44 in the state where the on-off valve 76 is closed, and is supplied to the combustor 22 from the combustion hydrogen supply pipe 43.

An exhaust heat supply system 80 includes the exhaust heat supply pipe 81 that is branched from a pipe connected to a supply source of the unused exhaust heat and is connected to the steam generator 32 and the hydrogen occlusion device 70, and a switching valve 82 that is provided at a branch point of the exhaust heat supply pipe 81 and switches a supply destination of the unused exhaust heat. The exhaust heat supply system 80 may include a heat storage tank that stores the unused exhaust heat, and the unused exhaust heat stored in the heat storage tank may be supplied to the steam generator 32 and the hydrogen occlusion device 70 (heating heat exchange unit 74) via the exhaust heat supply pipe 81.

A control device 90 is implemented as a microprocessor using a CPU as a core, and includes a ROM, a RAM, an input and output port, and the like in addition to the CPU. Detection signals from a temperature sensor provided near the electrolysis cell stack 21, a temperature sensor provided in the combustor 22, a flowmeter provided in the antioxidant hydrogen supply pipe 41, a flowmeter provided in the combustion hydrogen supply pipe 43, a flowmeter provided in the hydrogen recovery pipe 61, and the like are input to the control device 90 via an input port. The control device 90 outputs control signals to the steam generator 32, the water pump 34, the hydrogen blowers 42, 44, the air blower 52, the on-off valve 76, the switching valve 82, and the like via an output port.

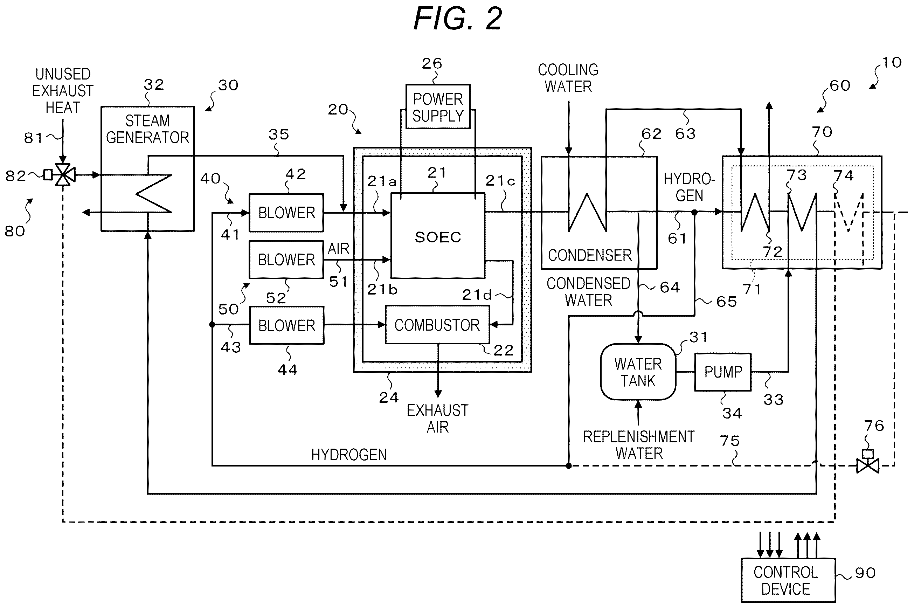

Next, an operation of the electrolysis system 10 configured as described above will be described. In particular, a description will be given to an operation when the generated hydrogen generated during the electrolysis operation is occluded in the hydrogen occlusion device 70 and an operation when the hydrogen occluded in the hydrogen occlusion device 70 is released during an electrolysis stop or an activation. Fig. 2 is a diagram showing flows of fluids such as the raw material water, the cooling water, and the unused exhaust heat during the hydrogen generation. In the drawings, a dotted line indicates that there is no fluid flow.

In the electrolysis system 10 during the electrolysis operation, the control device 90 controls the steam generator 32 and the water pump 34 such that steam is supplied to the hydrogen electrode of the electrolysis cell stack 21, controls the switching valve 82 such that unused exhaust heat is supplied to the steam generator 32 (heat recovery heat exchanger), and controls the air blower 52 such that air is supplied to the oxygen electrode of the electrolysis cell stack 21. Subsequently, the control device 90 supplies electric power between terminals of the electrolysis cell stack 21 from the power supply device 26 to perform the electrolysis operation. Then, the control device 90 controls the hydrogen blowers 42, 44 such that the generated hydrogen generated by the electrolysis operation is supplied to the hydrogen electrode of the electrolysis cell stack 21 as the antioxidant hydrogen via the reflux pipe 65 and is supplied to the combustor 22 as the combustion hydrogen.

As shown in Fig. 2, by driving of the water pump 34, the raw material water in the water tank 31 passes through the second cooling heat exchange unit 73, is heated by heat exchange with the hydrogen occlusion alloy 71, and is then supplied to the steam generator 32 (steam generation heat exchanger) to become steam. Then, the steam is heated by heat exchange with the combustion exhaust gas or the like through the hydrogen electrode inlet pipe 21a, and then supplied to the hydrogen electrode of the electrolysis cell stack 21 to be electrolyzed. The generated hydrogen generated at the hydrogen electrode by the electrolysis is exhausted to the hydrogen recovery pipe 61 via the hydrogen electrode outlet pipe 21c together with unreacted steam. The exhaust gas (hydrogen electrode off-gas) containing the generated hydrogen and the steam is supplied to the hydrogen occlusion device 70 after the steam in the hydrogen electrode off-gas is condensed by heat exchange with the cooling water in the condenser 62. The generated hydrogen supplied to the hydrogen occlusion device 70 is cooled by heat exchange with the cooling water passed through the condenser 62 and the raw material water from the water tank 31 in this order, and is occluded in the hydrogen occlusion alloy 71. In addition, a part of the generated hydrogen is refluxed via the reflux pipe 65 and is supplied to the hydrogen electrode of the electrolysis cell stack 21 as the antioxidant hydrogen and is supplied to the combustor 22 as fuel hydrogen.

As described above, since the cold heat of the cooling water and the raw material water is used for cooling the hydrogen occlusion alloy 71, it is possible to secure the cold heat required for occluding hydrogen into the hydrogen occlusion alloy 71 and to reduce an energy loss required for storing hydrogen. In addition, since the raw material water is heated in advance by the hydrogen occlusion alloy 71 (second cooling heat exchange unit 73) and the steam is generated from the raw material water by the steam generator 32 using the unused exhaust heat as the heat source, energy required for generating the steam can be reduced. As a result, energy efficiency of the electrolysis system 10 can be further improved.

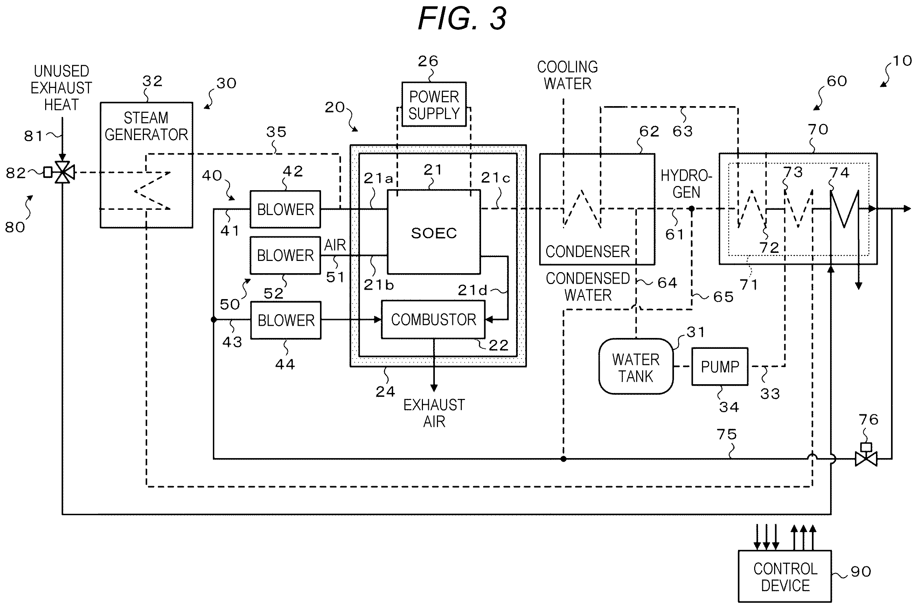

Next, the operation when the hydrogen occluded by the hydrogen occlusion device 70 is released will be described. Fig. 3 is a diagram showing a flow of the unused exhaust heat during hydrogen release. The hydrogen release is performed while the electrolysis of the electrolysis system 10 is stopped or activated. The hydrogen released during the electrolysis stop is used to keep an inside of the electrolysis module 20 warm by combustion of the combustion hydrogen in the combustor 22 in order to quickly perform a next activation, or is supplied to an outside of the system and used for other purposes. The hydrogen released during the activation is used to warm up the electrolysis module 20 by the combustion of the combustion hydrogen in the combustor 22.

The control device 90 controls the switching valve 82 such that the unused exhaust heat is supplied to the heating heat exchange unit 74. Accordingly, as shown in Fig. 3, the hydrogen occlusion alloy 71 of the hydrogen occlusion device 70 is heated by the unused exhaust heat, and the hydrogen occluded in the hydrogen occlusion alloy 71 is released. As described above, since the unused exhaust heat is used for heating the hydrogen occlusion alloy 71, the energy loss caused by the hydrogen release can also be reduced. When the control device 90 activates the electrolysis system 10 or keeps the inside of the electrolysis module 20 warm during the electrolysis stop, the control device 90 opens the on-off valve 76 such that the outlet of the hydrogen occlusion device 70 communicates with the antioxidant hydrogen supply pipe 41 and the combustion hydrogen supply pipe 43. Then, the control device 90 controls the hydrogen blowers 42, 44 and the air blower 52 such that the antioxidant hydrogen is supplied to the hydrogen electrode of the electrolysis cell stack 21 and the combustion hydrogen and air are supplied to the combustor 22. Accordingly, the released hydrogen is supplied to the hydrogen electrode of the electrolysis cell stack 21 via the antioxidant hydrogen supply pipe 41, and is supplied to the combustor 22 via the combustion hydrogen supply pipe 43.

In the first embodiment described above, the hydrogen occlusion device 70 includes the first cooling heat exchange unit 72 that cools the hydrogen occlusion alloy 71 with the cooling water and the second cooling heat exchange unit 73 that cools the hydrogen occlusion alloy 71 with the raw material water as cooling heat exchangers for cooling the hydrogen occlusion alloy 71 to occlude hydrogen, but the second cooling heat exchange unit 73 may be omitted depending on a required amount of the cold heat.

In the first embodiment described above, the hydrogen occlusion device 70 includes the heating heat exchange unit 74 that heats the hydrogen occlusion alloy 71 with the unused exhaust heat as a heating heat exchanger for heating the hydrogen occlusion alloy 71 to release hydrogen, but other heat sources may be used to release hydrogen.

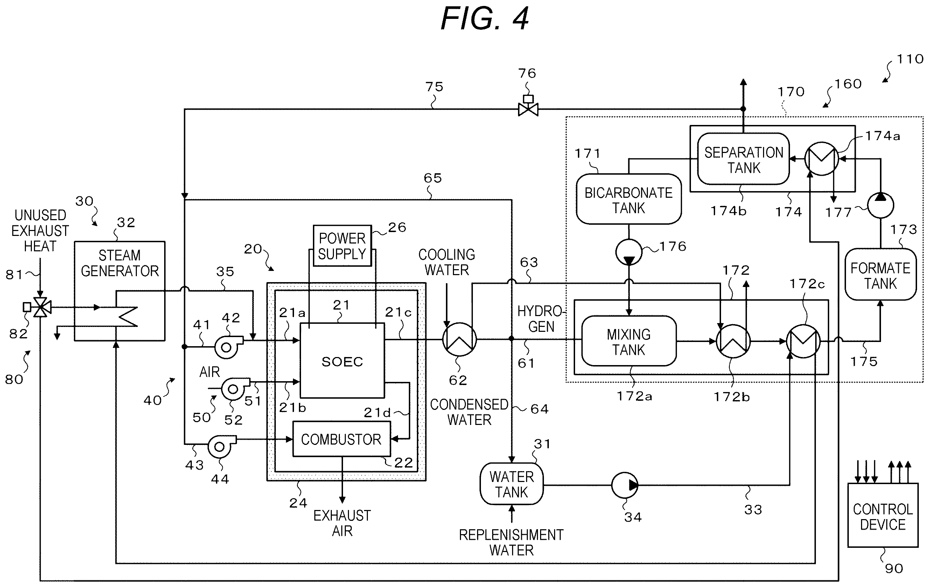

In the first embodiment described above, the hydrogen occlusion alloy 71 is used to absorb and release hydrogen, but a liquid organic hydrogen carrier (LOHC) may be used to absorb and release hydrogen. Fig. 4 is a schematic diagram showing an electrolysis system 110 according to a second embodiment. As shown, the electrolysis system 110 of the second embodiment includes a hydrogen absorption and release system 170 instead of the hydrogen occlusion device 70.

The hydrogen absorption and release system 170 absorbs and releases hydrogen by a chemical reaction using bicarbonate/formate as a liquid organic hydrogen carrier. The hydrogen absorption and release system 170 includes a bicarbonate tank 171 that stores a bicarbonate aqueous solution, an absorption reactor 172 that generates a formate aqueous solution by reacting the bicarbonate aqueous solution with hydrogen using cold heat (for example, 30°C to 40°C), a formate tank 173 that stores the formate aqueous solution, a release reactor 174 that generates bicarbonate and hydrogen by decomposing the formate aqueous solution using hot heat (for example, 50°C to 60°C), and a circulation pipe 175 that annularly connects these components.

The absorption reactor 172 includes a mixing tank 172a that mixes the bicarbonate aqueous solution and hydrogen, and a first cooling heat exchange unit 172b and a second cooling heat exchange unit 172c that supply cold heat required for a reaction with hydrogen to the bicarbonate aqueous solution. The bicarbonate tank 171 is connected to the mixing tank 172a via the circulation pipe 175, and a pump 176 is provided between the mixing tank 172a and the bicarbonate tank 171 in the circulation pipe 175. The bicarbonate aqueous solution in the bicarbonate tank 171 is supplied to the mixing tank 172a by driving of the pump 176. Further, the hydrogen recovery pipe 61 is connected to the mixing tank 172a, and the generated hydrogen obtained by the gas-liquid separation in the condenser 62 is introduced into the mixing tank 172a. The bicarbonate aqueous solution supplied to the mixing tank 172a passes through the first cooling heat exchange unit 172b and the second cooling heat exchange unit 172c in this order, and is cooled by heat exchange with cold heat, thereby reacting with the mixed hydrogen to generate the formate aqueous solution. Accordingly, the generated hydrogen can be stored as the formate aqueous solution (liquid).

The first cooling heat exchange unit 172b is connected downstream of the condenser 62 in the cooling water supply pipe 63, and cools the bicarbonate aqueous solution by heat exchange with the cooling water (for example, 35°C to 40°C) passing through the condenser 62. The second cooling heat exchange unit 172c is connected downstream of the water tank 31 and upstream of the steam generator 32 in the water supply pipe 33, and cools the bicarbonate aqueous solution by heat exchange with the raw material water (for example, 20°C to 30°C) from the water tank 31. The raw material water heated by heat exchange with the bicarbonate aqueous solution is supplied to the steam generator 32. For the first cooling heat exchange unit 172b and the second cooling heat exchange unit 172c, the first cooling heat exchange unit 172b is disposed upstream of the second cooling heat exchange unit 172c with respect to a flow of the bicarbonate aqueous solution such that heat exchange with the bicarbonate aqueous solution is performed in the order of the cooling water and the raw material water (in the order from the highest water temperature). The condenser 62 is supplied with a large amount of cooling water for heat exchange with the hydrogen electrode off-gas, and has a large heat capacity, and thus the cooling water passed through the condenser 62 can secure cold heat required for the reaction between the bicarbonate aqueous solution and hydrogen. On the other hand, although the temperature of the raw material water is lower than the temperature of the cooling water passed through the condenser 62, the sufficient cold heat cannot be secured by simply supplying the raw material water since the supply amount of the raw material water is restricted according to the target generation amount of hydrogen. Since the supply of the raw material water is used in combination with the supply of the cooling water, it is possible to promote the cooling of the bicarbonate aqueous solution, promote the reaction with hydrogen, and absorb a sufficient amount of hydrogen.

The release reactor 174 includes a heating heat exchange unit 174a that supplies hot heat required for decomposition of the formate aqueous solution, and a separation tank 174b that separates bicarbonate and hydrogen generated by the decomposition of the formate aqueous solution. The formate tank 173 is connected to the heating heat exchange unit 174a via the circulation pipe 175, and a pump 177 is provided between the heating heat exchange unit 174a and the formate tank 173 in the circulation pipe 175. By driving of the pump 177, the formate aqueous solution in the formate tank 173 is supplied to the heating heat exchange unit 174a. The formate aqueous solution supplied to the heating heat exchange unit 174a is decomposed into bicarbonate and hydrogen by being heated by heat exchange with hot heat. The bicarbonate and the hydrogen are separated in the separation tank 174b, the bicarbonate is stored in the bicarbonate tank 171, and the hydrogen is released.

The heating heat exchange unit 174a is connected to the exhaust heat supply pipe 81 and heats the formate aqueous solution by heat exchange with the unused exhaust heat (for example, 50°C to 60°C) supplied via the exhaust heat supply pipe 81.

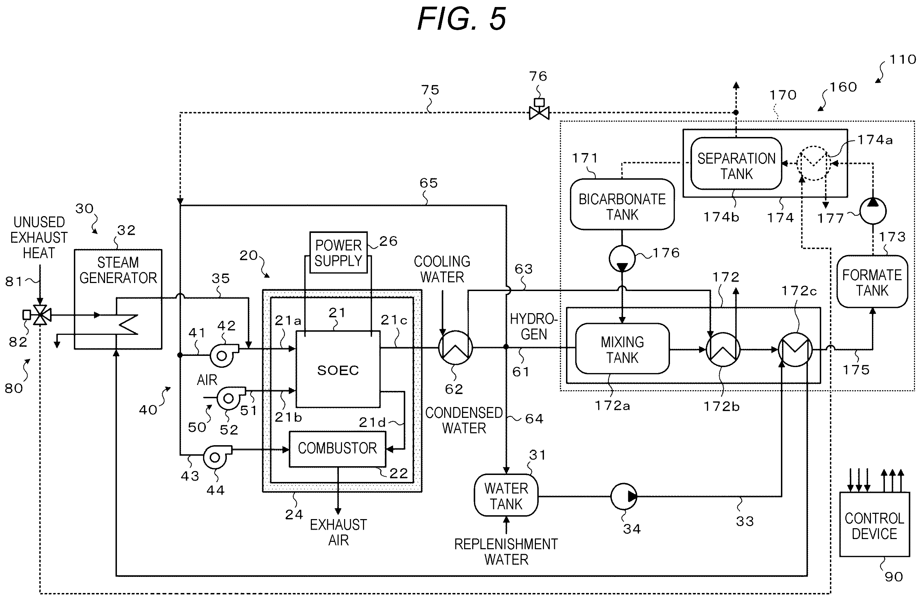

Next, an operation of the electrolysis system 110 according to the second embodiment configured as described above will be described. In particular, a description will be given to an operation when the generated hydrogen generated during the electrolysis operation is absorbed by the liquid organic hydrogen carrier and an operation when the hydrogen absorbed by the liquid organic hydrogen carrier is released during the electrolysis stop or the activation. Fig. 5 is a diagram showing flows of fluids such as the raw material water, the cooling water, and the unused exhaust heat during the hydrogen generation. In the drawings, a dotted line indicates that there is no fluid flow.

In the electrolysis system 110 according to the second embodiment during the electrolysis operation, similarly to the electrolysis system 10 according to the first embodiment described above, the control device 90 controls the switching valve 82 to supply the unused exhaust heat to the steam generator 32 and drives the water pump 34 to supply the raw material water in the water tank 31 to the steam generator 32 such that steam is supplied to the hydrogen electrode of the electrolysis cell stack 21. Then, the control device 90 controls the air blower 52 to supply air to the oxygen electrode of the electrolysis cell stack 21, and electric power is supplied from the power supply device 26 to the electrolysis cell stack 21.

As shown in Fig. 5, by driving of the water pump 34, the raw material water in the water tank 31 passes through the second cooling heat exchange unit 172c of the absorption reactor 172, is heated by heat exchange with the bicarbonate aqueous solution, and is then supplied to the steam generator 32 (steam generation heat exchanger) to become steam. Then, the steam is heated by heat exchange with the combustion exhaust gas or the like through the hydrogen electrode inlet pipe 21a, and then supplied to the hydrogen electrode of the electrolysis cell stack 21 to be electrolyzed. The generated hydrogen generated at the hydrogen electrode by the electrolysis is exhausted to the hydrogen recovery pipe 61 via the hydrogen electrode outlet pipe 21c together with unreacted steam. The exhaust gas (hydrogen electrode off-gas) containing the generated hydrogen and the steam is supplied to the mixing tank 172a of the absorption reactor 172 after the steam in the hydrogen electrode off-gas is condensed by heat exchange with the cooling water in the condenser 62. The generated hydrogen supplied to the mixing tank 172a is mixed with the bicarbonate aqueous solution supplied from the bicarbonate tank 171 to the mixing tank 172a by driving of the pump 176. Then, the bicarbonate aqueous solution mixed with the generated hydrogen is cooled by heat exchange with the cooling water passed through the condenser 62 and the raw material water from the water tank 31 in order, and reacts with the generated hydrogen. Accordingly, the formate aqueous solution is generated, and the generated formate aqueous solution is stored in the formate tank 173.

As described above, since the cold heat of the cooling water and the raw material water is used to cool the bicarbonate aqueous solution in the absorption reactor 172, it is possible to secure the cold heat required for the reaction with hydrogen and to reduce the energy loss related to the absorption of hydrogen. In addition, since the temperature of the raw material water is increased in advance in the second cooling heat exchange unit 172c of the absorption reactor 172 and the steam is generated from the raw material water in the steam generator 32 using the unused exhaust heat as the heat source, the energy required for generating the steam can be reduced. As a result, energy efficiency of the electrolysis system 110 can be further improved.

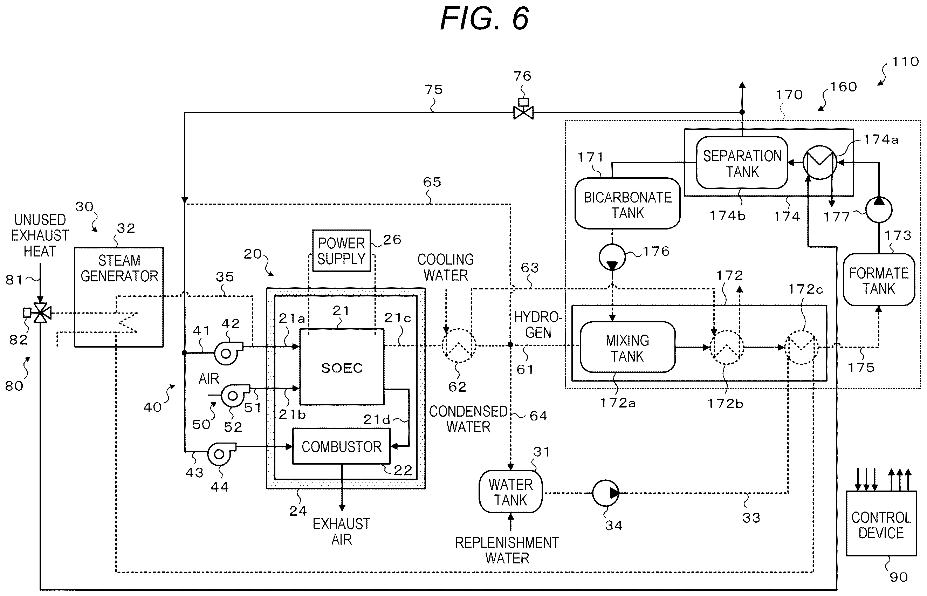

Next, an operation of releasing hydrogen stored as a formate aqueous solution will be described. Fig. 6 is a diagram showing a flow of the unused exhaust heat during the hydrogen release. The hydrogen release is performed while the electrolysis of the electrolysis system 110 is stopped or activated. The hydrogen released during the electrolysis stop is used to keep the inside of the electrolysis module 20 warm by combustion of the combustion hydrogen in the combustor 22 in order to quickly perform a next activation, or is supplied to the outside of the system and used for other purposes. The hydrogen released during the activation is used to warm up the electrolysis module 20 by the combustion of the combustion hydrogen in the combustor 22.

The control device 90 controls the switching valve 82 to drive the pump 177 such that the unused exhaust heat is supplied to the heating heat exchange unit 174a of the release reactor 174. Accordingly, as shown in Fig. 6, the formate aqueous solution passing through the heating heat exchange unit 174a is heated by heat exchange with the unused exhaust heat and decomposed into bicarbonate and hydrogen, and the hydrogen separated in the separation tank 174b is released. As described above, since the unused exhaust heat is used for heating the formate aqueous solution, the energy loss caused by the release of hydrogen can also be reduced. When the control device 90 activates the electrolysis system 110 or keeps the inside of the electrolysis module 20 warm during the electrolysis stop, the control device 90 opens the on-off valve 76 such that the separation tank 174b of the release reactor 174 communicates with the antioxidant hydrogen supply pipe 41 and the combustion hydrogen supply pipe 43. Then, the control device 90 controls the hydrogen blowers 42, 44 and the air blower 52 such that the antioxidant hydrogen is supplied to the hydrogen electrode of the electrolysis cell stack 21 and the combustion hydrogen and air are supplied to the combustor 22. Accordingly, the released hydrogen is supplied to the hydrogen electrode of the electrolysis cell stack 21 via the antioxidant hydrogen supply pipe 41, and is supplied to the combustor 22 via the combustion hydrogen supply pipe 43.

In the second embodiment described above, the hydrogen absorption and release system 170 includes the heating heat exchange unit 174a that heats the liquid organic hydrogen carrier (formate aqueous solution) with the unused exhaust heat as the heating heat exchanger for heating the liquid organic hydrogen carrier to release hydrogen, but other heat sources may be used to release hydrogen.

In the above-described first embodiment and second embodiment, the electrolysis systems 10, 110 include the electrolysis cell stack 21 that generates hydrogen by the steam electrolysis. However, the electrolysis system 10 may switch and execute an electrolysis mode in which hydrogen is generated by the steam electrolysis and a power generation mode in which electric power is generated by a reaction between hydrogen as a fuel gas and oxygen contained in air by using the electrolysis cell stack 21 as a reversibly operating solid oxide cell stack. When the reversibly operating solid oxide cell stack is operated in the power generation mode, for example, the unused exhaust heat may be supplied to the heating heat exchange unit 74 of the hydrogen occlusion device 70 to release hydrogen from the hydrogen occlusion device 70, and the released hydrogen may be supplied to the hydrogen electrode of the reversibly operating solid oxide cell stack by the hydrogen blower 42.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

The present specification also discloses a technical idea in which "the electrolysis system according to claim 1" in claim 4 at the time of filing is changed to "the electrolysis system according to any one of claims 1 to 3".

### Industrial Applicability

The present disclosure can be utilized in a production industry of an electrolysis system.

## Claims

1. An electrolysis system (10) comprising:
a solid oxide electrolysis cell (21) configured to electrolyze steam supplied to a hydrogen electrode to generate hydrogen;
a hydrogen absorption and release unit (70) configured to cool a hydrogen carrier (71) to absorb hydrogen and heat the hydrogen carrier (71) to release hydrogen;
a steam supply line (35) configured to supply steam to the hydrogen electrode;
a recovery line (61) configured to recover hydrogen contained in an exhaust gas exhausted from the hydrogen electrode to the hydrogen absorption and release unit (70);
a gas-liquid separation unit (62) provided in the recovery line (61) and configured to cool the exhaust gas by heat exchange with a coolant to perform gas-liquid separation;
a coolant supply line (63) configured to supply the coolant to the gas-liquid separation unit and then supply the coolant to the hydrogen absorption and release unit (70); and
a first cooling heat exchange unit (72) provided in the hydrogen absorption and release unit (70) and configured to cool the hydrogen carrier (71) by heat exchange with the coolant supplied from the coolant supply line (63).

2. The electrolysis system (10) according to claim 1, further comprising:
a raw material water supply line (33) configured to supply raw material water to the hydrogen absorption and release unit (70) and then supply the raw material water to the steam supply line (35); and
a second cooling heat exchange unit (73) provided in the hydrogen absorption and release unit (70) and configured to cool the hydrogen carrier (71) by heat exchange with the raw material water supplied from the raw material water supply line (33).

3. The electrolysis system (10) according to claim 2, wherein
the first cooling heat exchange unit (72) and the second cooling heat exchange unit (73) cool hydrogen from the recovery line (61) or the hydrogen carrier (71) in an order of the first cooling heat exchange unit (72) and the second cooling heat exchange unit (73).

4. The electrolysis system (10) according to any one of claims 1 to 3, further comprising:
an evaporation unit (32) connected to the steam supply line (35) and configured to generate steam using external heat;
a heating heat exchange unit (74) provided in the hydrogen absorption and release unit (70) and configured to heat the hydrogen carrier (71) by heat exchange with the external heat; and
an external heat supply line (81) configured to selectively supply the external heat to the evaporation unit (32) and the hydrogen absorption and release unit (70).

5. An electrolysis system (10) comprising:
a solid oxide electrolysis cell (21) configured to electrolyze steam supplied to a hydrogen electrode to generate hydrogen;
a hydrogen absorption and release unit (70) configured to cool a hydrogen carrier (71) to absorb hydrogen and heat the hydrogen carrier (71) to release hydrogen;
a steam supply line (35) configured to supply steam to the hydrogen electrode;
an evaporation unit (32) connected to the steam supply line (35) and configured to generate steam using external heat;
a heating heat exchange unit (74) provided in the hydrogen absorption and release unit (70) and configured to heat the hydrogen carrier (71) by heat exchange with the external heat; and
an external heat supply line (81) configured to selectively supply the external heat to the evaporation unit (32) and the hydrogen absorption and release unit (70).

6. The electrolysis system (10) according to any one of claims 1 to 5, wherein
the hydrogen absorption and release unit (70) includes a hydrogen occlusion material as the hydrogen carrier (71).

7. The electrolysis system (10) according to any one of claims 1 to 5, wherein
the hydrogen absorption and release unit (70) includes a liquid organic hydrogen carrier as the hydrogen carrier (71).

8. The electrolysis system (10) according to claim 7, wherein
the hydrogen absorption and release unit (70) includes a first tank (171) configured to store the liquid organic hydrogen carrier, an absorption reaction unit (172) configured to cool the liquid organic hydrogen carrier to cause the liquid organic hydrogen carrier to react with hydrogen, a second tank (173) configured to store the liquid organic hydrogen carrier after the reaction, a release reaction unit (174) configured to heat the liquid organic hydrogen carrier after the reaction to release hydrogen, and a circulation path (175) configured to annularly connect the first tank (171), the absorption reaction unit (172), the second tank (173), and the release reaction unit (174), and
the first cooling heat exchange unit (72) is provided in the absorption reaction unit (172).
